# EUROPÄISCHE PATENTSCHRIFT

(11) **EP 2 035 183 B1**
(45) Veröffentlichungstag und Bekanntmachung des Hinweises auf die Patenterteilung: **11.04.2012**
(21) Anmeldenummer: 07764576.0
(22) Anmeldetag: 06.06.2007
(51) Int. Cl.: B23Q 1/00, B23Q 11/10, B23B 29/28

(54) **SPANNKOPF MIT ZWEI UM 90 ° VERSETZTEN WERKZEUGEN**
CLAMPING HEAD COMPRISING TWO TOOLS OFFSET BY 90°
TÊTE DE SERRAGE COMPORTANT DEUX OUTILS DÉSAXÉS À 90°

(30) Priorität: 17.06.2006 DE 102006027947
(43) Veröffentlichungstag der Anmeldung: 18.03.2009
(73) Patentinhaber: Wiedmann, Jörg, 71404 Korb (DE)
(72) Erfinder: Wiedmann, Jörg, 71404 Korb (DE)
(74) Vertreter: Gleiss, Alf-Olav
(86) Internationale Anmeldenummer: PCT/EP2007/005004
(87) Internationale Veröffentlichungsnummer: WO 2007/147487

(56) Entgegenhaltungen:
- JP-A- 53 143 093
- US-B1- 6 571 671

## Beschreibung

Die Erfindung betrifft einen Spannkopf für Werkzeuge oder Wechselhalter gemäß Oberbegriff des Anspruchs 1 (siehe, z. B., US-6,571,671).

Spannköpfe der hier angesprochenen Art sind bekannt. Sie dienen dazu, verschiedene Werkzeuge lagegenau zu halten, oder aber auch Wechselhalter, in die Werkzeuge einsetzbar sind. Der Spannkopf wird mittels einer starr an einer geeigneten Halterung angebrachten Spannschraube durch eine Spanneinrichtung befestigt. Dabei drückt die Spanneinrichtung eine Verzahnung des Grundkörpers des Spannkopfs in eine Gegenverzahnung einer ebenfalls an dieser Halterung montierten Teilscheibe. In der entspannten Stellung der Spanneinrichtung ist der Grundkörper des Spannkopfs um die Spannschraube drehbar, sodass jeweils eines der beiden Werkzeuge oder einer der Wechselhalter in eine Bearbeitungsposition verlagert werden kann, in der ein Werkstück bearbeitbar ist. An dem Spannkopf sind also mindestens zwei Werkzeuge oder Wechselhalter vorgesehen, die durch Verdrehen des Grundkörpers des Spannkopfs in eine Bearbeitungsposition gebracht werden können, während jeweils das andere Werkzeug beziehungsweise der andere Wechselhalter nicht in Bearbeitungsposition ist, also nicht der Bearbeitung eines Werkstücks dient. Bei herkömmlichen Spannköpfen befinden sich die Werkzeuge oder Wechselhalter an gegenüberliegenden Seiten des Grundkörpers des Spannkopfs, sodass dieser sehr viel Platz braucht, was bei dessen Verwendung innerhalb von geschlossenen Bearbeitungsmaschinen nachteilig ist. Es droht immer die Gefahr einer Kollision eines nicht in Bearbeitungsposition angeordneten Werkzeugs oder Wechselhalters mit der Maschinenverkleidung, was zu Beschädigungen der am Spannkopf befestigten Werkzeuge oder der Maschine führen kann. Bei nicht geschlossenen Bearbeitungsmaschinen besteht sogar die Gefahr, dass sich der Maschinenbediener an dem hervorstehenden Werkzeug verletzen kann.

Aufgabe der Erfindung ist es daher, einen Spannkopf der eingangs genannten Art zu schaffen, der diesen Nachteil nicht aufweist.

Zur Lösung dieser Aufgabe wird ein Spannkopf nach Anspruch 1 vorgeschlagen. Immer wenn eines der Werkzeuge oder einer der Wechselhalter sich in Bearbeitungsposition befindet, ist die gegenüberliegende Seite des Grundkörpers des Spannkopfs frei, sodass der Raumbedarf deutlich geringer ist und bei einer Verlagerung des Spannkopfs in Richtung auf ein zu bearbeitendes Werkstücks und in Gegenrichtung mehr Raum zur Verfügung steht und die Gefahr einer Kollision eines Werkzeugs oder eines Wechselhalters mit einer Begrenzungswand einer Bearbeitungsmaschine deutlich reduziert ist. Dabei ist sichergestellt, dass bei der Bearbeitung eines Werkstücks mittels eines Spannkopfs der hier angesprochenen Art optimale Arbeitsbedingungen herrschen, weil jeweils das Werkzeug beziehungsweise der Wechselhalter, der sich in Bearbeitungsposition befindet, mit einem Kühl-/Schmiermittel beaufschlagt werden kann, während das andere Werkzeug beziehungsweise der andere Wechselhalter ohne weitere Vorkehrungen trocken liegt, also nicht mit einem Kühl-/Schmiermittel beaufschlagt wird, das dann ungenutzt ausströmen würde und zu einer unnötigen Verschmutzung der Umgebung des Spannkopfs beziehungsweise eines Maschinenraumes führen würde.

Weitere Ausgestaltungen des Spannkopfs ergeben sich aus den Unteransprüchen.

Die Erfindung wird im Folgenden anhand der Zeichnungen näher erläutert. Es zeigen:
- Figur 1: einen Spannkopf in einer ersten Funktionsstellung innerhalb eines Maschineninnenraums unmittelbar vor der Bearbeitung eines Werkstücks;
- Figur 2: den in Figur 1 dargestellten Spannkopf in vergrößerter Darstellung und mit zusätzlichen Details;
- Figur 3: den Spannkopf, der in den Figuren 1 und 2 dargestellt ist, nach einer Verdrehung um 180°;
- Figur 4: einen Spannkopf gemäß den Figuren 1 bis 3 mit einem zusätzlichen Wechselhalter;
- Figur 5: eine Spannschraube in Längsschnitt;
- Figur 6: einen Querschnitt durch die Spannschraube gemäß Figur 4 entlang der in Figur 5 dargestellten Linie VI-VI und
- Figur 7: eine Seitenansicht des Spannkopfs mit eingesetzter Spannschraube.

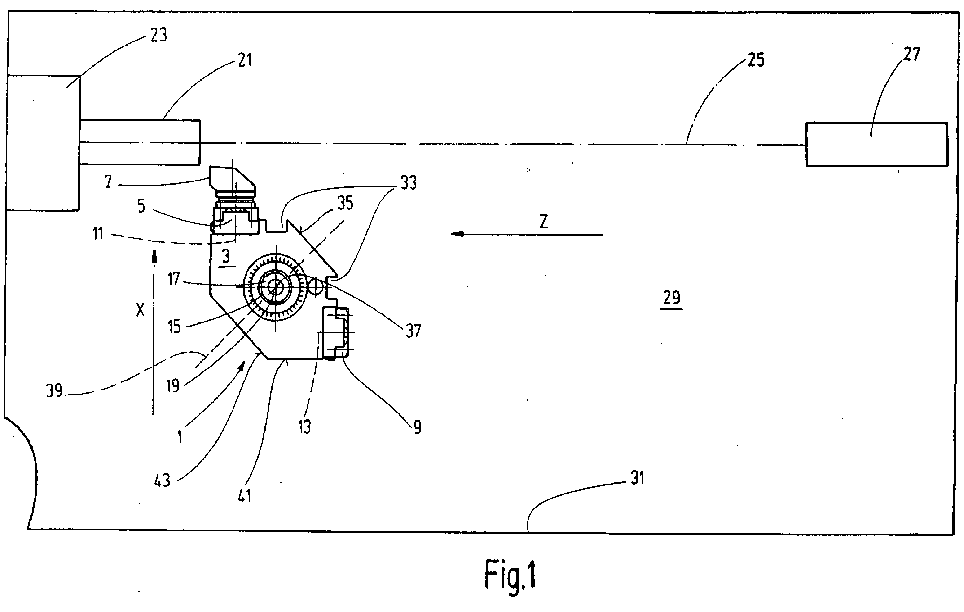

Figur 1 zeigt einen Spannkopf 1 mit einem Grundkörper 3, an dem mindestens zwei Werkzeuge oder auch als Einbauflansch bezeichnete Wechselhalter angebracht werden können. Das in Figur 1 dargestellte Ausführungsbeispiel des Spannkopfs 1 zeigt, dass an dem Grundkörper 3 des Spannkopfs 1 ein erster Wechselhalter 5 mit einem ersten Werkzeug 7 angebracht ist, außerdem ein zweiter Wechselhalter 9, welcher der Aufnahme eines zweiten Werkzeugs dient. Es sei hier ausdrücklich darauf hingewiesen, dass die Werkzeuge auch unmittelbar in den Grundkörper 3 des Spannkopfs 1 eingesetzt werden können. Die Verwendbarkeit des Spannkopfs 1 ist aber flexibler, wenn, wie hier dargestellt, Wechselhalter vorgesehen werden, in die verschiedene Werkzeuge einsetzbar sind.

Die Mittelachse 11 des ersten Wechselhalters 5 und die Mittelachse 13 des zweiten Wechselhalters 9 schließen einen Winkel von 90° zueinander ein. Mit anderen Worten: Die Wechselhalter 5 und 9 sind um 90° zueinander versetzt am Grundkörper 3 des Spannkopfs 1 angebracht.

Der Grundkörper 3 wird von einer senkrecht zur Bildebene von Figur 1 verlaufenden Aufnahmeöffnung 15 durchdrungen, in die eine Spannschraube 17 eingesetzt ist. Diese wird von einem in Richtung ihrer senkrecht auf der Bildebene von Figur 1 stehenden Längsachse verlaufenden Kühl-/Schmiermittelkanalabschnitt zumindest über Bereiche ihrer Länge durchdrungen.

Der Grundkörper 3 kann im unverspannten Zustand um die Spannschraube 17 verdreht werden. Ist er in der gewünschten Position angeordnet, wird er durch eine an der Spannschraube 17 angebrachten, hier nicht dargestellten Spannvorrichtung drehfest gehalten.

In Figur 1 befindet sich der Spannkopf 1 in einer ersten Funktionsstellung, in der sich der erste Wechselhalter 5 mit dem ersten Werkzeug 7 in einer Bearbeitungsposition befindet, in der ein hier lediglich angedeutetes Werkstück 21 bearbeitbar ist, hier beispielsweise einer Außenbearbeitung unterzogen werden kann. Das Werkstück 21 wird auf geeignete Weise, hier beispielsweise mittels eines Backenfutters 23, gehalten und gegenüber dem Spannkopf 1 um eine Drehachse 25 in Rotation versetzt. Gegebenenfalls wird es durch einen Reitstock 27 abgestützt.

Das Werkstück 21 befindet sich gemeinsam mit dem Spannkopf 1 in einem Maschineninnenraum 29, der durch Begrenzungswände umschlossen wird, die hier durch einen Rahmen 31 angedeutet sind.

Die Mittelachse 11 des ersten Wechselhalters 5 und gegebenenfalls des ersten Werkzeugs 7 steht hier senkrecht auf der auch als Bezugsachse bezeichneten Drehachse 25. Der Spannkopf 1 ist in Richtung einer durch einen Pfeil angedeuteten X-Achse beweglich. Es wird deutlich, dass der Spannkopf 1 relativ viel Bewegungsspielraum zur unteren Begrenzungswand des Maschineninnenraums hat, weil der zweite Wechselhalter 9 nicht gegenüber dem ersten Wechselhalter 5 auf der der Drehachse 25 gegenüberliegenden Seite des Spannkopfs 1, sondern 90° versetzt gegenüber dem Wechselhalter 9 am Grundkörper 3 angebracht ist. Er weist also gemäß Figur 1 nach rechts. Er ist folglich auf der dem zu bearbeitenden Werkstück 21 abgewandten Seite des Spannkopfs 1 angeordnet.

Der Spannkopf 1 ist im übrigen auch in Richtung der durch einen Pfeil angedeuteten Z-Achse beweglich. Auch hier ist der Platzbedarf des Spannkopfs 1 relativ gering, weil gegenüber dem zweiten Wechselhalter 9, also auf der dem Werkzeug 21 zugewandten Seite des Spannkopfs 1 kein weiterer Wechselhalter am Grundkörper 3 angebracht ist. Die um 90° versetzte Anordnung der Wechselhalter 5 und 9 am Grundkörper 3 und der entsprechenden Werkzeuge führt dazu, dass der Platzbedarf des Spannkopfs 1 innerhalb des Maschinenraums 29 in Richtung der X-Achse und der Z-Achse gegenüber herkömmlichen Spannköpfen deutlich verringert ist.

Das in Figur 1 dargestellte Ausführungsbeispiel des Spannkopfs 1 weist noch eine weitere Schnittstelle für mindestens ein zusätzliches Werkzeug oder einen zusätzlichen Wechselhalter auf, das/der hier nicht dargestellt ist. Erkennbar sind hier aber senkrecht zur Bildebene von Figur 1 verlaufende und um 90° gegeneinander versetzte Nuten 33 im Grundkörper 3, die zur Realisierung einer Schwalbenschwanzführung im Bereich der Schnittstelle vorgesehen sind. Außerdem ist eine hier vorgesehene Schräge 35 erkennbar, die parallel zur Mittelachse 37 der Ausnehmung 15 im Grundkörper 3 verläuft und senkrecht zu einer Winkelhalbierenden 39 angeordnet ist, die der Mittelachse 11 des ersten Wechselhalters 5 und der Mittelachse 13 des zweiten Wechselhalters 9 zugeordnet ist und hier durch die Mittelachse 37 verläuft. Die Anordnung der hier als Schräge 35 bezeichneten Abflachung des Grundkörpers 3 kann aber abgewandelt und an gewünschte Einsatzfälle angepasst werden.

Der Grundkörper 3 kann im Bereich seiner Umfangsfläche 41 noch eine Abflachung 43 aufweisen, die, wie die Schräge 35, zwischen dem ersten Wechselhalter 5 und dem zweiten Wechselhalter 9 angeordnet ist. Sie befindet sich vorzugsweise gegenüber der Schräge 35 und verläuft parallel zur Mittelachse 37 der Aufnahmeöffnung 15 und ist wiederum senkrecht zur Winkelhalbierenden 39 angeordnet. Die Schräge 35 und die Abflachung 43 verlaufen vorzugsweise parallel zueinander auf gegenüberliegenden Seiten der Mittelachse 37 und zwar in gleichem Abstand zu dieser.

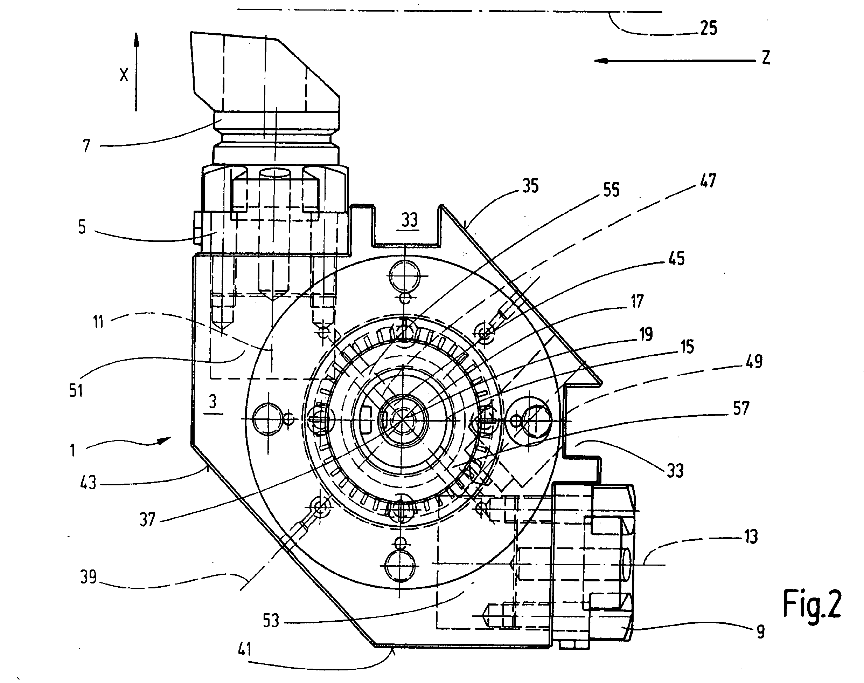

Figur 2 zeigt den Spannkopf 1 aus Figur 1 in vergrößerter Darstellung und mit zusätzlichen Details. Gleiche Teile sind mit gleichen Bezugsziffern versehen, sodass insofern auf die Beschreibung zu Figur 1 verwiesen wird, um Wiederholungen zu : vermeiden.

Oben in Figur 2 ist gerade noch die auch als Bezugsachse bezeichnete Drehachse 25 des hier nicht mehr sichtbaren Werkstücks 21 zu erkennen. Deutlich wird auch, dass die Mittelachse 11 des ersten Wechselhalters 5 und die des ersten Werkzeugs 7 senkrecht zur Drehachse 25 verlaufen, während die Mittelachse 13 des zweiten Wechselhalters 9 parallel zu dieser angeordnet ist. Wird der Spannkopf 1 um 180° gedreht, so verläuft die Mittelachse 13 wiederum parallel zur Drehachse 25. Während das erste Werkzeug 7 der Außenbearbeitung des Werkstücks 21 dient, wird vorzugsweise in den zweiten Wechselhalter 9 ein Werkzeug eingesetzt, das dann zur Innenbearbeitung des Werkstücks verwendet wird. Durch die beiden unterschiedlich zur Drehachse 25 ausgerichteten Mittelachsen der Wechselhalter ist es auf besonders einfache Weise möglich, ein Werkstück mit ein und demselben Spannkopf 1 sowohl außen als auch innen zu bearbeiten.

Bei der Bearbeitung des Werkstücks handelt es sich hier um eine spanende Bearbeitung, wobei mit an den Werkzeugen vorgesehenen Schneiden Späne von dem in der Regel aus Metall bestehenden Werkstück abgetragen werden. Um die dabei entstehende Wärme abführen zu können, wird ein Kühl-/Schmiermittel eingesetzt. Dieses wird über den in der Spannschraube 17 vorhandenen Kühl-/Schmiermittelkanalabschnitt 19 eingespeist und auf geeignete Weise dem aktiven Werkzeug zugeführt. In der Spannschraube 17 ist ein hier gestrichelt eingezeichneter Querkanal 45 vorgesehen, dessen Mittelachse 47 zu einer gedachten parallel zur Drehachse 25 verlaufenden Horizontalen 49 unter 45° geneigt nach links oben in Richtung auf das Werkzeug verläuft, das sich in Bearbeitungsposition befindet. Hier ist es das erste Werkzeug 7 im ersten Wechselhalter 5. Wird der Grundkörper 3 des Spannkopfs 1 um 180° gedreht, so befindet sich an der Position des ersten Wechselhalters 5 der zweite Wechselhalter 9. Bei der Drehung des Grundkörpers 3 um die Spannschraube 17 bleibt die Ausrichtung des Querkanals 45 unverändert, sodass dieser beziehungsweise seine Mittelachse 47 wiederum nach links oben in Richtung auf das in den Wechselhalter 9 eingesetzte Werkzeug weist, das sich dann in Bearbeitungsposition befindet.

Um die Kühl-/Schmiermittelversorgung der Wechselhalter 5 und 9 und der darin eingesetzten Werkzeuge zu gewährleisten, sind im Grundkörper 3 Kühl-/Schmiermittelräume 51, 53 vorgesehen, wobei der erste Raum 51 dem ersten Wechselhalter 5 und damit dem ersten Werkzeug 7 und der zweite Raum 53 dem zweiten Wechselhalter 9 und einem darin eingespannten zweiten Werkzeug zugeordnet sind. In die Kühl-/Schmiermittelräume 51 und 53 eingeleitetes Kühl-/Schmiermittel wird auf geeignete bekannte Weise, über Kanäle den Werkzeugen, insbesondere deren aktiven Schneiden zugeführt.

Um eine Verbindung zwischen dem Querkanal 45 und den Kühl-/Schmiermittelräumen 51 und 53 zu gewährleisten, sind in den Grundkörper 3 Kühl-/Schmiermittelkanäle 55, 57 eingebracht, deren Mittelachsen mit der Mittelachse 47 des Querkanals 45 zusammenfallen und die von der Aufnahmeöffnung 15 zu den Kühl-/Schmiermittelräumen 51 und 53 führen.

Es zeigt sich also, dass die Kühl-/Schmiermittelkanäle 55 und 57 die Aufnahmeöffnung 15 schneiden und zu den Kühl-/Schmiermittelräumen 51 und 53 führen. Da die Spannschraube 17 eine Querbohrung 45 aufweist, die von dem Kühl-/Schmiermittelkanalabschnitt 19 in der Spannschraube 17 in Figur 2 nach links oben führt, wird nur derjenige Kühl-/Schmiermittelkanal mit einem Kühl-/Schmierhittel beaufschlagt, der sich in Bearbeitungsposition befindet. Der jeweils andere Kühl-/Schmiermittelraum wird nicht versorgt, sodass das ungenutzte Werkzeug trocken bleibt. Dies führt dazu, dass der Maschineninnenraum 29 nicht unnötig mit Kühl-/Schmiermittel besprüht wird. Insbesondere zeigt sich aber, dass der Bedarf an Kühl-/Schmiermittel deutlich reduziert wird, weil eben ausschließlich das tatsächlich eingesetzte Werkzeug, also das in Bearbeitungsposition angeordnete Werkzeug mit diesem Medium beaufschlagt wird. Die Umschaltung der Kühl-/Schmiermittelversorgung ist auf besonders einfache Weise realisiert. Es bedarf also keiner zusätzlichen Schalt- und/oder Steuermittel, um lediglich das aktive Werkzeug mit Kühl-/Schmiermittel zu beaufschlagen.

Bei dem hier dargestellten Ausführungsbeispiel des Spannkopfs 1 verlaufen also innerhalb des Grundkörpers 3 Kühl-/Schmiermittelkanäle 55 und 57 senkrecht zur oben erwähnten Winkelhalbierenden 39. Entsprechend ist auch die Mittelachse 47 des Querkanals 45 ausgerichtet. Dieser verläuft aber ausschließlich von dem Kühl-/Schmiermittelkanalabschnitt 19 in Richtung auf das aktive Werkzeug beziehungsweise den aktiven Wechselhalter und den zugehörigen Kühl-/Schmiermittelraum. Die Orientierung der Kühl-/Schmiermittelkanäle 55 und 57 und die des Querkanals 45 kann auch verändert werden. Entscheidend ist eben, dass der Querkanal 45 immer nur einen der Kühl-/Schmiermittelkanäle im Grundkörper 3 des Spannkopfs 1 mit Kühl-/Schmiermittel versorgt und zwar den, der zu dem aktiven Werkzeug beziehungsweise dem aktiven Wechselhalter führt, das/der sich in Bearbeitungsposition befindet.

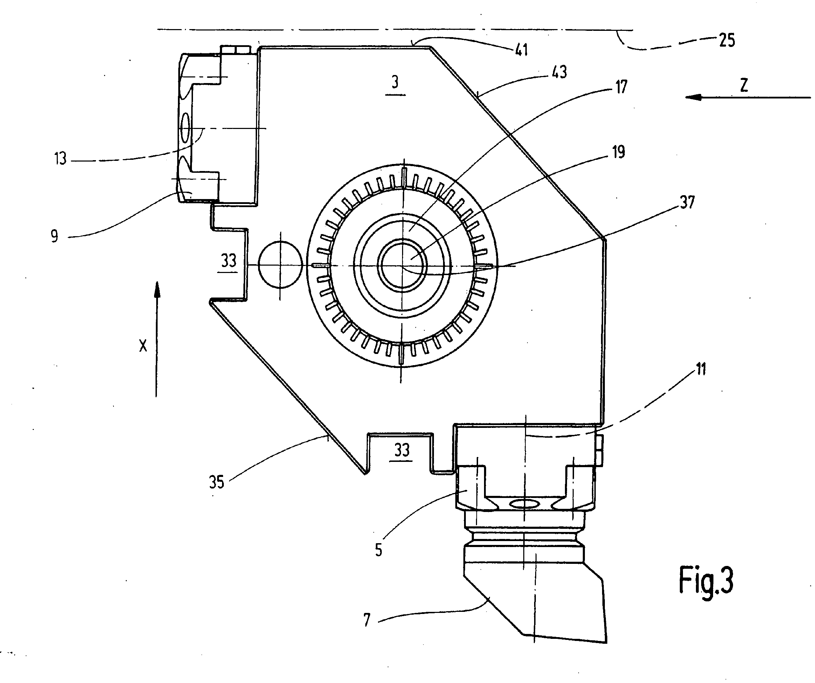

Zur Verdeutlichung der Funktionsweise des Spannkopfs 1 ist dieser noch mal in Figur 3 wiedergegeben, allerdings um 180° um die

Mittelachse 37 gegenüber der in den Figuren 1 und 2 dargestellten Position verdreht. Es befindet sich nun der zweite Wechselhalter 9, in den hier allerdings noch kein Werkzeug eingesetzt ist, in seiner der als Bezugsachse bezeichneten Drehachse 25 nächstgelegenen Position, nämlich der Bearbeitungsposition. In dem zweiten Wechselhalter 9 wird vorzugsweise ein Innenbearbeitungswerkzeug eingesetzt. Zur Innenbearbeitung des Werkstücks wird der Spannkopf 1 in Richtung der in Figur 1 wiedergegebenen Z-Achse verlagert. Es zeigt sich hier noch mal deutlich, dass auf der dem zweiten Wechselhalter 9 gegenüberliegenden Seite des Grundkörpers 3, also auf der Seite der Abflachung 43, kein weiteres Werkzeug und auch kein Wechselhalter vorgesehen ist, sodass der Bewegungsspielraum in Richtung der Z-Achse gegenüber herkömmlichen Spannköpfen vergrößert ist.

Auf die weitere Beschreibung des in Figur 3 wiedergegebenen Spannkopfs 1 wird verzichtet und vielmehr auf die Beschreibung in den vorangegangenen Figuren verwiesen. Gleiche Teile sind hier mit gleichen Bezugsziffern versehen, um Wiederholungen zu vermeiden.

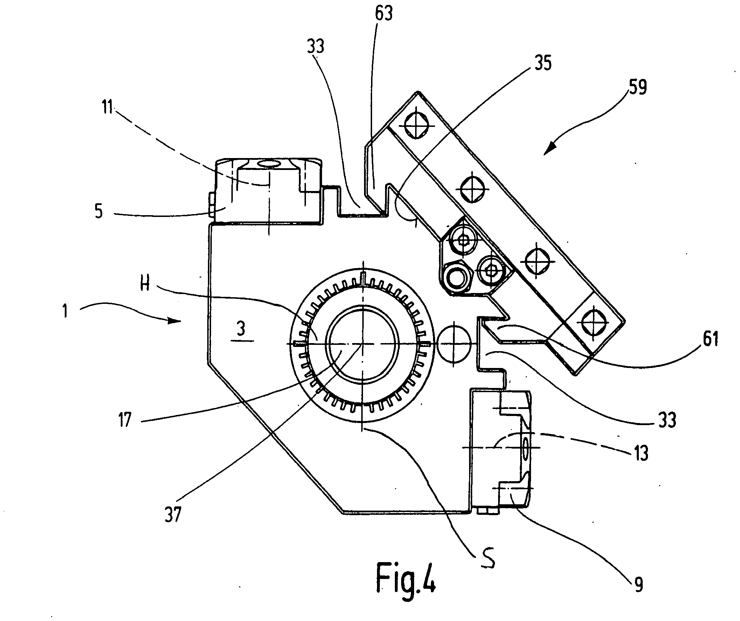

Figur 4 zeigt den Spannkopf 1 noch mal in der Position, wie sie anhand der Figuren 1 und 2 erläutert wurde. Gleiche Teile sind mit gleichen Bezugsziffern versehen, sodass auf die Erläuterungen zu den vorangegangenen Figuren verwiesen wird.

Figur 4 dient ausschließlich dazu, die grundsätzlich bekannte zusätzliche Schnittstelle am Grundkörper 3 des Spannkopfs 1 zu erläutern: Im Bereich dieser Schnittstelle ist hier ein Wechselhalter 59 eingesetzt, der grundsätzlich bekannt ist. Er weist Haltebereiche 61 und 63 auf, die in die Nuten 33 eingreifen. Deren Seitenwände verlaufen parallel zu gedachten senkrechten und horizontalen Ebenen, die parallel zu einer die Mittelachse 37 der Aufnahmeöffnung 15 schneidenden Senkrechten S oder Horizontalen H verlaufen. Da die Schräge 35 senkrecht auf der Winkelhalbierenden 39 der Senkrechten und Horizontalen steht, ergeben sich zwischen den an die Schräge 35 angrenzenden Seitenflanken der Nuten 33 spitze Winkel, sodass die oben erwähnte Schwalbenschwanzführung realisiert wird. Die Anbringung eines Wechselhalters 59 an einem Grundkörper eines Spannkopfs 1 ist grundsätzlich bekannt, ebenso die hier erwähnte Schwalbenschwanzführung. Daher wird hier nicht weiter darauf eingegangen. Im Übrigen kann der Wechselhalter 59 auf beliebige Weise ausgestaltet sein, um gewünschte Werkzeuge aufnehmen zu können, die der Bearbeitung des hier nicht dargestellten Werkstücks 21 dienen. Außerdem kann an der Schnittstelle auch ein Werkzeug statt eines Wechselhalters angebracht sein.

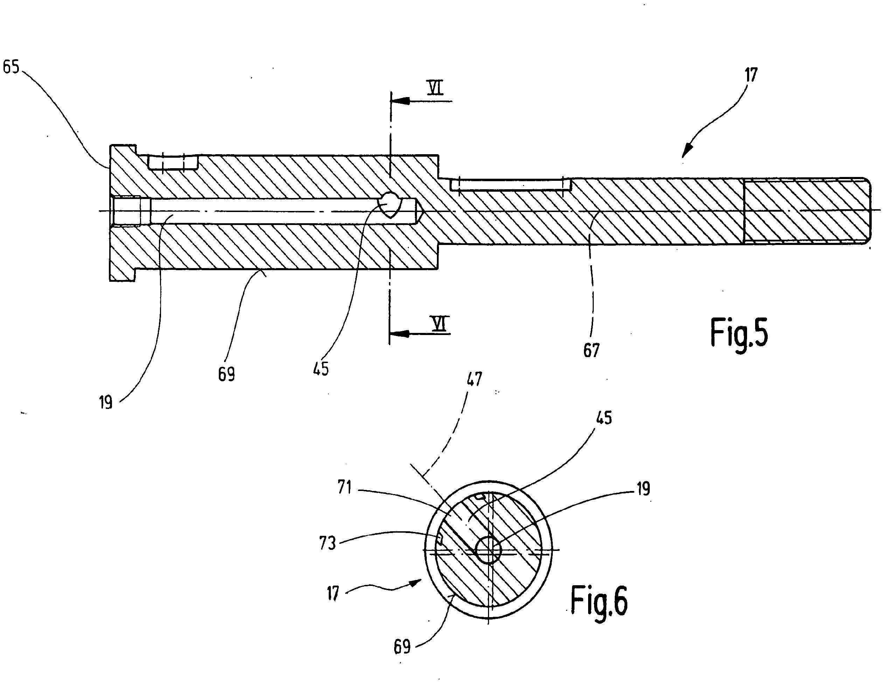

Figur 5 zeigt die Spannschraube 17 im Längsschnitt. Das linke Ende 65 der Spannschraube 17 ist in den vorangegangenen Figuren in Draufsicht wiedergegeben. Deutlich erkennbar ist hier auch der in Richtung der Längsachse 67 der Spannschraube 17 verlaufende Kühlmittel-/Schmiermittelkanalabschnitt 19, der konzentrisch zur Mittelachse 37 der Aufnahmeöffnung 15 verläuft, wenn die Spannschraube 17 dort eingesetzt ist.

In einem Abstand zum linken Ende 65 mündet der Querkanal 45 im Kühl-/Schmiermittelkanalabschnitt 19. Er liegt allerdings nicht in der in Figur 5 gewählten Schnittebene.

Figur 6 zeigt einen Querschnitt durch die Spannschraube 17 entlang der in Figur 5 eingezeichneten Linie VI-VI. Aus dieser Darstellung ist deutlich zu erkennen, dass der Querkanal 45 von dem Kühl-/Schmiermittelkanalabschnitt 19 ausgeht und bis zur Umfangsfläche 69 der Spannschraube 17 verläuft. Diese Umfangsfläche 69 liegt an der Innenfläche der Aufnahmeöffnung 15 an, sodass ein aus dem Querkanal 45 nach außen austretendes Kühl-/Schmiermittel möglichst verlustfrei in einen Kühl-/Schmiermittelkanal 55 beziehungsweise 57 im Grundkörper 3 des Spannkopfs 1 abgegeben werden kann, und zwar an denjenigen Kanal, der zu dem Werkzeug beziehungsweise dem Wechselhalter führt, der sich in Bearbeitungsposition befindet und damit in der Nähe der als Bezugsachse bezeichneten Drehachse 25.

In Figur 6 ist die Spannschraube 17 so angeordnet, wie dies auch in Figur 2 der Fall ist. Die Mittelachse 47 des Querkanals 45 verläuft also von dem Kühl-/Schmiermittelkanalabschnitt 19 unter 45° nach links oben.

Aus Figur 6 ist noch ersichtlich, dass in die Umfangsfläche 69 der Spannschraube 17 vorzugsweise mindestens eine die Mündung 71 des Querkanals 45 in der Umfangsfläche 69 umgebende Nut 73 eingebracht ist, um ein Dichtelement, beispielsweise einen O-Ring aufzunehmen, der den Übergabebereich des Kühl-/Schmiermittels von der Mündung 71 zur entsprechenden Mündung der Kühl-/Schmiermittelkanäle 55 und 57 in der Ausnehmung 15 im Grundkörper 3 des Spannkopfs 1 fluiddicht abschließt.

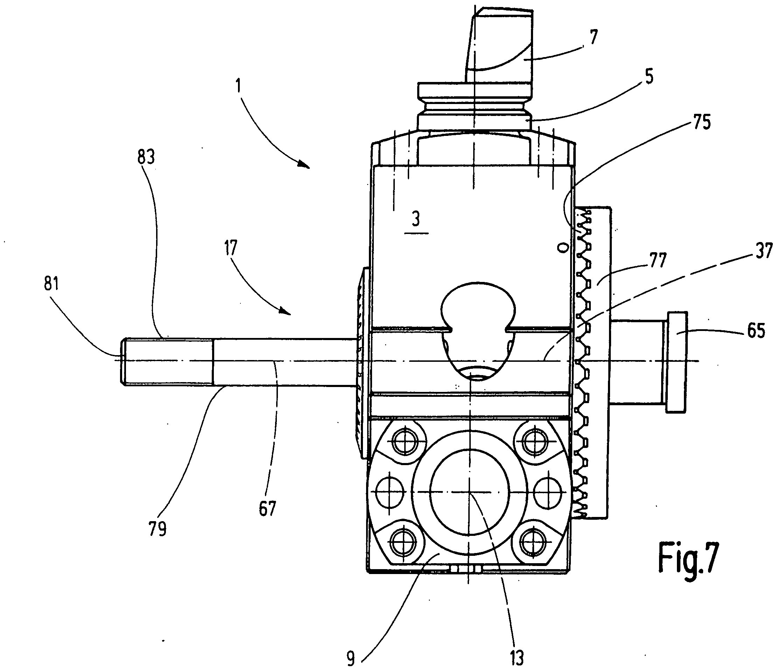

Figur 7 zeigt schließlich den Spannkopf 1 in Seitenansicht, wobei dieser, wie in Figur 1 dargestellt, so angeordnet ist, dass der erste Wechselhalter 5 mit dem ersten Werkzeug 7 oben, also in der Nähe der Drehachse 25 angeordnet ist, die in Figur 7 allerdings nicht wiedergegeben wird.

In Figur 7 sind alle Teile mit gleichen Bezugsziffern versehen, wie sie oben bereits vergeben und erläutert wurden. Insofern wird also auf die Beschreibung der vorangegangenen Figuren verwiesen.

Figur 7 soll nur verdeutlichen, wie die Spannschraube 17 den Grundkörper 3 durchdringt. Eine links von dem Grundkörper 3 an der Spannschraube 17 angebrachte Spanneinrichtung, die hier nicht dargestellt ist, drückt einen mit Erhöhungen und Vertiefungen versehenen Teilbereich 75 des Grundkörper, gegen eine an sich bekannte Teilscheibe 77 mit Erhöhungen und Vertiefungen, die in Richtungen auf den Grundkörper 3 weisen, um bei einer Verdrehung des Grundkörpers 3 eine Indexierung, also bestimmte Winkelstellungen vorzugeben. Die Teilung und Ausgestaltung der Erhöhungen und Vertiefungen auf der Teilscheibe 77 und im Teilbereich 75 des Grundkörpers 3 sind so gewählt, dass diese jeweils ineinander greifen können.

Die Spannschraube 17 durchgreift den Grundkörper 3. Auf dem frei aus dem Grundkörper 3 herausragenden Bereich 79 der Spannschraube 17 wird ein hier nicht dargestelltes Spannelement angebracht, um den Spannkopf 1 in einer gewünschten Position drehfest zu fixieren. Dazu ist an dem freien Ende 81, das dem in Figur 5 dargestellten linken Ende 65 der Spannschraube 17 gegenüber liegt, ein Außengewinde 83 vorgesehen.

Die Indexierung an der Teilscheibe 77 und dem Teilbereich 75 ist so gewählt, dass der Spannkopf 1, wie anhand der vorangegangenen Figuren erläutert, um 180° gedreht werden kann, um zum einen den ersten Wechselhalter 5 und das zugehörige Werkzeug 7 in eine Bearbeitungsposition nahe der Drehachse 25 zu verlagern 7 und zum anderen den zweiten Wechselhalter 9 und ein dort eingesetztes Werkzeug. Dem jeweils in der Nähe der Drehachse 25 angeordneten Werkzeug wird, wie oben beschrieben, ein Kühl-/Schmiermittel zugeführt, während das andere trocken bleibt.

## Patentansprüche

1. Spannkopf (1) für Werkzeuge oder Wechselhalter zur Bearbeitung eines Werkstücks (21), wobei das Werkstück (21) relativ zu dem Spannkopf (1) um eine Drehachse (25) gedreht wird, mit
- einem Grundkörper (3),
- einem ersten am Grundkörper (3) befestigten Werkzeug (7) oder Wechselhalter (5) für Werkzeuge mit einer ersten Mittelachse (11),
- einem zweiten am Grundkörper (3) befestigten Werkzeug oder Wechselhalter (9) für Werkzeuge mit einer zweiten Mittelachse (13),
- einer den Grundkörper (3) durchdringenden Aufnahmeöffnung (15),
- mit von der Aufnahmeöffnung (15) zu den Werkzeugen oder Wechselhaltern im Grundkörper (3) verlaufenden Kühl-/Schmiermittelkanälen (55,57), und mit
- einer in die Aufnahmeöffnung (15) einsetzbaren Spannschraube (17), die einen in ihrer Längsrichtung verlaufenden Kühl-/Schmiermittelkanalabschnitt (19) aufweist, wobei
- der Grundkörper (3) um die Spannschraube (17) verdrehbar ist, um jeweils nur eines der Werkzeuge oder einen der Wechselhalter in eine der Drehachse (25) nächstgelegene Position, nämlich eine Bearbeitungsposition zu verlagern, in der das Werkstück (21) bearbeitbar ist, wobei
- das erste Werkzeug (7) oder der erste Wechselhalter (5) und das zweite Werkzeug oder der zweite Wechselhalter (9) um 90" versetzt zueinander am Grundkörper (3) des Spannkopfes (1) angebracht sind, so dass deren Mittelachsen (11,13) senkrecht zueinander orientiert sind, wobei
- die erste Mittelachse (11) senkrecht zu der Drehachse (25) und die zweite Mittelachse (13) parallel zu der Drehachse (25) orientiert ist, wenn das erste Werkzeug (7) oder der erste Wechselhalter (5) in der Bearbeitungsposition angeordnet ist, und wobei
- die Spannschraube (17) einen den Kühl-/Schmiermittelkanalabschnitt (19) schneidenden Querkanal (45) für das Kühl-/Schmiermittel aufweist, dessen Mittelachse (47) so ausgerichtet ist, dass er mit dem Kühl-/Schmiermittelkanal (55,57) im Grundkörper (3) des Spannkopfs (1) in Fluidverbindung steht, dessen Werkzeug oder Wechselhalter in Bearbeitungsposition ist,
**dadurch gekennzeichnet, dass**
- der Kühl-/Schmiermittelkanal (55,57) im Grundkörper (3) in einen dem Werkzeug (7) oder Wechselhalter (5,9) zugeordneten Kühl-/Schmiermittelraum (51, 53) führt,
- eine Kühl-/Schmiermittelzuführung, insbesondere über Kanäle, von dem Kühl-/Schmiermittelraum (51,53) zu dem Werkzeug (7), insbesondere dessen aktiven Schneiden, oder Wechselhalter (5,9) vorliegt, und dass
- das zweite Werkzeug oder der zweite Wechselhalter (9) durch Drehen des Grundkörpers (3) um 180° -ausgehend von einer Anordnung des ersten Werkzeugs (7) oder des ersten Wechselhalters in der Bearbeitungsposition- in die Bearbeitungsposition bringbar ist, wobei auch dann
- die zweite Mittelachse (13) parallel und die erste Mittelachse (11) senkrecht zu der Drehachse (25) orientiert ist.

2. Spannkopf nach Anspruch 1, **dadurch gekennzeichnet, dass** die Mittelachse des Werkzeugs oder des Wechselhalters, das/der sich in Bearbeitungsposition befindet, senkrecht zu der Mittelachse des Werkzeugs oder des Werkzeughalters verläuft, das/der sich nicht in Bearbeitungsposition befindet, dass die Mittelachse (47) des Querkanals (45) in der Spannschraube (17) in dem Zustand, in dem sie in den Grundkörper (3) des Spannkopfs (1) eingesetzt ist, unter 45° zu den Mittelachsen (11,13) der Werkzeuge oder der Wechselhalter (5,9) verläuft, und dass sich der Querkanal (45) von dem Kühl-/Schmiermittetkanatabschnitt (19) der Spannschraube (17) zu deren Umfangsfläche (69) erstreckt und in Richtung auf den Kühl-/Schmiermittelkanal (55,57) verläuft, der sich von der Aufnahmeöffnung (15) für die Spannschraube zu dem Werkzeug oder Wechselhalter erstreckt, das/der sich in Bearbeitungsposition befindet.

3. Spannkopf nach einem der vorhergehenden Ansprüche, **dadurch gekennzeichnet, dass** das erste Werkzeug (7) der Außenbearbeitung des Werkstücks (21) oder der erste Wechselhalter (5) der Aufnahme eines Werkzeugs zur Außenbearbeitung des Werkstücks dient.

4. Spannkopf nach einem der vorhergehenden Ansprüche, **dadurch gekennzeichnet, dass** das zweite Werkzeug der Innenbearbeitung des Werkstücks (21) oder der zweite Wechselhalter der Aufnahme eines Werkzeugs zur Innenbearbeitung des Werkstücks dient.

5. Spannkopf nach einem der vorhergehenden Ansprüche, **dadurch gekennzeichnet, dass** der Grundkörper (3) mindestens eine Schnittstelle für wenigstens ein weiteres Werkzeug aufweist.

6. Spannkopf nach Anspruch 5, **dadurch gekennzeichnet, dass** die Schnittstelle eine Schwalbenschwanzführung umfasst.

7. Spannkopf nach Anspruch 5 oder 6, **dadurch gekennzeichnet, dass** der Grundkörper Im Bereich der Schnittstelle eine Schräge (35) aufweist, die parallel zur Mittelachse (37) der Aufnahmeöffnung (19) und senkrecht zur Winkelhalbierenden (39) der Mittelachsen der Werkzeuge oder Wechselhalter verläuft.

8. Spannkopf nach einem der vorhergehenden Ansprüche, **dadurch gekennzeichnet, dass** der Grundkörper (3) im Bereich seiner Umfangsfläche (41) eine Abflachung (43) zwischen dem ersten Werkzeug oder ersten Wechselhalter und dem zweiten Werkzeug oder zweiten Wechselhalter aufweist, die parallel zur Mittelachse (37) der Aufnahmeöffnung (19) verläuft.

9. Spannkopf nach Anspruch 8, **dadurch gekennzeichnet dass** die Abflachung (43) senkrecht zur Winkelhalbierenden der Mittelachsen der Werkzeuge oder Wechselhafter verläuft.

10. Spannkopf nach einem der vorhergehenden Ansprüche 8 bis 9, **dadurch gekennzeichnet, dass** die Anflachung (43) parallel zur Schräge (35) verläuft.

11. Spannkopf nach einem der vorhergehenden Ansprüche 8 bis 10, **dadurch gekennzeichnet, dass** der Abstand der Schräge (35) und der Abstand der Abflachung (43) zur Mittelachse (37) der Aufnahmeöffnung (15) im Grundkörper (3) gleich groß ist.

## Claims

1. Clamping head (1) for tools or exchangeable holders for the machining of a work piece (21), wherein the work piece (21) is rotated relative to the clamping head (1) about a rotational axis (25), the clamping head having
- a base body (3),
- a first tool (7) or exchangeable holder (5) for tools attached to the base body (3) and having a first center axis (11),
- a second tool or exchangeable holder (9) for tools attached to the base body (3) and having a second center axis (13),
- a receiving opening (15) penetrating the base body (3),
- with coolant/lubricant channels (55, 57) running from the receiving opening (15) to the tools or exchangeable holders in the base body (3), and with
- a clamping screw (17) which can be inserted into the receiving opening (15) and presents a coolant/lubricant channel section (19) running in its longitudinal direction, wherein
- the base body (3) can be rotated about the clamping screw (17) in order to respectively move only one of the tools or one of the exchangeable holders into a position closest to the rotational axis (25), i. e. into a working position, in which the work piece (21) can be machined,
wherein
- the first tool (7) or the first exchangeable holder (5) and the second tool or the second exchangeable holder (9) are mounted to the base body (3) of the clamping head (1) offset to each other by 90°, so that their center axes (11, 13) are oriented perpendicularly to each other, wherein
- the first center axis (11) is oriented perpendicularly to the rotational axis (25) and the second center axis (13) in parallel to the rotational axis (25), when the first tool (7) or the first exchangeable holder (5) is arranged in the working position, and wherein
- the clamping screw (17) has a transversal channel (45) for the coolant/lubricant which intersects the coolant/lubricant channel section (19), the center axis (47) of the transversal channel being oriented so as to be in fluid connection with the respective coolant/lubricant channel (55, 57) in the base body (3) of the clamping head (1) whose tool or exchangeable holder is in the working position,
**characterised in that**
- the coolant/lubricant channel (55, 57) in the base body (3) leads into a coolant/lubricant chamber (51, 53) associated with the tool (7) or exchangeable holder (5, 9),
- a coolant/lubricant supply, in particular by means of channels, from the coolant/lubricant chamber (51, 53) to the tool (7), in particular to the operative cutters of the same, or to the exchangeable holders (5, 9) is provided, and that
- the second tool or the second exchangeable holder (9) can be brought into the working position by rotating the base body (3) by 180° - starting from an arrangement where the first tool (7) or the first exchangeable holder is in the working position -, wherein even then
- the second center axis (13) is oriented in parallel and the first center axis (11) perpendicularly to the rotational axis (25).

2. Clamping head according to claim 1, **characterised in that** the center axis of the tool or of the exchangeable holder that is arranged in the working position runs perpendicularly to the center axis of the tool or of the exchangeable holder that is not arranged in the working position, that the center axis (47) of the transversal channel (45) in the clamping screw (17), in the state in which it is inserted into the base body (3) of the clamping head (1), runs in an angle of 45° to the center axes (11, 13) of the tools or the exchangeable holders (5, 9), and that the transversal channel (45) extends from the coolant/lubricant channel section (19) of the clamping screw (17) to the peripheral surface (69) of the latter and runs in the direction towards the respective one of the coolant/lubricant channels (55, 57) which extends from the receiving opening (15) for the clamping screw to the tool or exchangeable holder that is arranged in the working position.

3. Clamping head according to any one of the preceding claims, **characterised in that** the first tool (7) serves for the external machining of the work piece (21), or that the first exchangeable holder (5) serves for receiving a tool for the external machining of the work piece.

4. Clamping head according to any one of the preceding claims, **characterised in that** the second tool serves for the internal machining of the work piece (21), or that the second exchangeable holder serves for receiving a tool for the internal machining of the work piece.

5. Clamping head according to any one of the preceding claims, **characterised in that** the base body (3) has at least one interface for at least one additional tool.

6. Clamping head according to claim 5, **characterised in that** the interface comprises a dovetail guide.

7. Clamping head according to claim 5 or 6, **characterised in that** the base body presents a slope (35) in the region of the interface, the slope running in parallel to the center axis (37) of the receiving opening (19) and perpendicularly to the angle bisector (39) of the center axes of the tools or exchangeable holders.

8. Clamping head according to any one of the preceding claims, **characterised in that**, in the region of its peripheral surface (41), the base body (3) presents a flattening (43) between the first tool or first exchangeable holder and the second tool or second exchangeable holder, the flattening running in parallel to the center axis (37) of the receiving opening (19).

9. Clamping head according to claim 8, **characterised in that** the flattening (43) runs perpendicularly to the angle bisector of the center axes of the tools or exchangeable holders.

10. Clamping head according to any one of the preceding claims 8 to 9, **characterised in that** the flattening (43) runs in parallel to the slope (35).

11. Clamping head according to any one of the preceding claims 8 to 10, **characterised in that** the distance of the slope (35) and the distance of the flattening (43) to the center axis (37) of the receiving opening (15) in the base body (3) are identical.

## Revendications

1. Tête de serrage (1) pour outils ou supports interchangeables pour l'usinage d'une pièce à usiner (21), dans laquelle la pièce à usiner (21) est tournée autour d'un axe de rotation (25) par rapport à la tête de serrage (1), comprenant
- un corps de base (3),
- un premier outil (7) ou support interchangeable (5) pour outils fixé au corps de base (3) avec un premier axe médian (11),
- un second outil ou support interchangeable (9) pour outils fixé au corps de base (3) avec un second axe médian (13),
- une ouverture de réception (15) traversant le corps de base (3),
- comprenant des canaux de réfrigérant/lubrifiant (55, 57) s'étendant de l'ouverture de réception (15) vers les outils ou supports interchangeables dans le corps de base (3), et comprenant
- une vis de serrage (17) insérable dans l'ouverture de réception (15), la vis présentant une section de canal de réfrigérant/lubrifiant (19) s'étendant dans sa direction longitudinale, dans laquelle
- le corps de base (3) peut être tourné autour de la vis de serrage (17) pour déplacer à chaque fois uniquement un des outils ou un des supports interchangeables dans une position la plus proche de l'axe de rotation (25), à savoir une position d'usinage dans laquelle la pièce à usiner (21) peut être usinée, dans laquelle
- le premier outil (7) ou le premier support interchangeable (5) et le second outil ou le second support interchangeable (9) sont montés sur le corps de base (3) de la tête de serrage (1) de manière décalée de 90° l'un de l'autre de sorte que leurs axes médians (11, 13) sont orientés perpendiculairement l'un à l'autre, dans laquelle
- le premier axe médian (11) est orienté perpendiculairement à l'axe de rotation (25) et le second axe médian (13) est orienté parallèlement à l'axe de rotation (25) lorsque le premier outil (7) ou le premier support interchangeable (5) est disposé dans la position d'usinage, et dans laquelle
- la vis de serrage (17) présente un canal transversal (45) pour le réfrigérant/lubrifiant, le canal coupant la section de canal de réfrigérant/lubrifiant (19), l'axe médian (47) du canal transversal étant orienté de sorte qu'il est en connexion fluidique avec le canal de réfrigérant/lubrifiant (55, 57) dans le corps de base (3) de la tête de serrage (1) dont l'outil ou le support interchangeable est en position d'usinage,
**caractérisée en ce que**
- le canal de réfrigérant/lubrifiant (55, 57) dans le corps de base (3) conduit dans un espace de réfrigérant/lubrifiant (51, 53) associé à l'outil (7) ou au support interchangeable (5, 9),
- une amenée de réfrigérant/lubrifiant, notamment par le biais de canaux, est présente de l'espace de réfrigérant/lubrifiant (51, 53) à l'outil (7), notamment à ses lames actives, ou au support interchangeable (5, 9),
- le second outil ou le second support interchangeable (9) peut être amené dans la position d'usinage par rotation du corps de base (3) de 180°, en partant d'une disposition du premier outil (7) ou du premier support interchangeable dans la position d'usinage, dans laquelle
- le second axe médian (13) est alors également orienté parallèlement et le premier axe médian (11) perpendiculairement à l'axe de rotation (25).

2. Tête de serrage selon la revendication 1, **caractérisée en ce que** l'axe médian de l'outil ou du support interchangeable qui se trouve en position d'usinage s'étend perpendiculairement à l'axe médian de l'outil ou du support interchangeable qui ne se trouve pas en position d'usinage, que l'axe médian (47) du canal transversal (45) dans la vis de serrage (17) s'étend, dans l'état dans lequel elle est insérée dans le corps de base (3) de la tête de serrage (1), avec un angle de 45° par rapport aux axes médians (11, 13) des outils ou des supports interchangeables (5, 9), et que le canal transversal (45) se prolonge de la section de canal de réfrigérant/lubrifiant (19) de la vis de serrage (17) vers la surface périphérique (69) de celle-ci et s'étend en direction du canal de réfrigérant/lubrifiant (55, 57) qui se prolonge de l'ouverture de réception (15) pour la vis de serrage vers l'outil ou le support interchangeable qui se trouve en position d'usinage.

3. Tête de serrage selon l'une quelconque des revendications précédentes, **caractérisée en ce que** le premier outil (7) sert à l'usinage externe de la pièce à usiner (21) ou le premier support interchangeable (5) sert à la réception d'un outil pour l'usinage externe de la pièce à usiner.

4. Tête de serrage selon l'une quelconque des revendications précédentes, **caractérisée en ce que** le second outil sert à l'usinage interne de la pièce à usiner (21) ou le second support interchangeable sert à la réception d'un outil pour l'usinage interne de la pièce à usiner.

5. Tête de serrage selon l'une quelconque des revendications précédentes, **caractérisée en ce que** le corps de base (3) présente au moins une interface pour au moins un autre outil.

6. Tête de serrage selon la revendication 5, **caractérisée en ce que** l'interface comprend un guidage en queue d'aronde.

7. Tête de serrage selon la revendication 5 ou 6, **caractérisée en ce que** le corps de base présente dans la région de l'interface un biseau (35) qui s'étend parallèlement à l'axe médian (37) de l'ouverture de réception (19) et perpendiculairement à la bissectrice (39) des axes médians des outils ou supports interchangeables.

8. Tête de serrage selon l'une quelconque des revendications précédentes, **caractérisée en ce que** le corps de base (3) présente dans la région de sa surface périphérique (41) un aplatissement (43) entre le premier outil ou premier support interchangeable et le second outil ou second support interchangeable qui s'étend parallèlement à l'axe médian (37) de l'ouverture de réception (19).

9. Tête de serrage selon la revendication 8, **caractérisée en ce que** l'aplatissement (43) s'étend perpendiculairement à la bissectrice des axes médians des outils ou supports interchangeables.

10. Tête de serrage selon l'une quelconque des revendications précédentes 8 à 9, **caractérisée en ce que** l'aplatissement (43) s'étend parallèlement au biseau (35).

11. Tête de serrage selon l'une quelconque des revendications précédentes 8 à 10, **caractérisée en ce que** l'écart entre le biseau (35) et l'écart entre l'aplatissement (43) et l'axe médian (37) de l'ouverture de réception (15) dans le corps de base (3) sont identiques.
